# EUROPÄISCHE PATENTSCHRIFT

(11) **EP 2 289 298 B1**
(45) Veröffentlichungstag und Bekanntmachung des Hinweises auf die Patenterteilung: **18.04.2018**
(21) Anmeldenummer: 10401140.8
(22) Anmeldetag: 18.08.2010
(51) Int. Cl.: A01C 7/04

(54) **Pneumatische Einzelkornsämaschine**
Pneumatic single grain seeder
Semoir monograine pneumatique

(30) Priorität: 01.09.2009 DE 102009043914
(43) Veröffentlichungstag der Anmeldung: 02.03.2011
(73) Patentinhaber: Amazonen-Werke H. Dreyer GmbH & Co. KG, 49205 Hasbergen (DE)
(72) Erfinder: Mertens, Daniel, 26123 Oldenburg (DE); Brüggemann, Klaus, 27777 Ganderkesee (DE)

(56) Entgegenhaltungen:
- EP-A1- 1 820 382
- EP-A1- 2 067 396
- DE-A1-102006 036 740
- DE-T2- 69 312 431

## Beschreibung

Die Erfindung betrifft eine pneumatische Einzelkornsämaschine gemäß des Oberbegriffes des Patentanspruches 1.

Eine derartige Einzelkornsämaschine ist beispielsweise durch die DE 10 2006 036 740 A1 bekannt. Die Vereinzelungstrommel der Einzelkornsämaschine weist Perforationen auf, die mit einer Druckdifferenz beaufschlagt werden. Wenn die angetriebene Vereinzelungstrommel in ihrem unteren Bereich durch einen Saatgutvorrat geführt wird, lagern sich an den mit einer Druckdifferenz beaufschlagten Perforationen der Vereinzelungstrommel Saatkörner an. In dem auf die Drehrichtung der Trommel bezogenen aufsteigenden Rotationsbereich der Vereinzelungstrommel sind Abstreiferelemente im Bereich der Perforationsreihen angeordnet, um eine Vereinzelung der an den Perforationen anhaftenden Saatkörner zu gewährleisten, damit Doppelbelegungen durch Saatkörner an einer Perforation vermieden werden. Weiterhin weist die Einzelkornsämaschine Ausbringleitungen auf, über welche die von der Vereinzelungstrommel vereinzelten Saatkörner Ausbringeinrichtungen, wie Säscharen, zugeführt werden. Bei der bekannten Einzelkornsämaschine sind die Einmündungsöffnungen der Ausbringleitungen und die zugeordneten Abdeckeinrichtungen, mittels deren die Druckdifferenz an den Perforationen zur Ablösung der Saatkörner unterbrochen werden kann, im auf die Drehrichtung der Trommel bezogenen abfallenden Rotationsbereich der Vereinzelungstrommel angeordnet.

Durch diese entfernte Anordnung der Einmündungsöffnungen der Ausbringleitungen und der zugeordneten Abdeckeinrichtungen zur Druckdifferenzunterbrechung ergibt sich ein großer ungenutzter Raum oberhalb des Saatgutvorrates in dem Vereinzelungsgehäuse.

Derartige Einzelkornsämaschinen sind mit Abschalteinrichtungen und Saatgutrückführungseinrichtung ausgestattet, um entweder die Arbeitsbreite der Einzelkornsämaschinen zu reduzieren oder einzelne Ausbringleitungen gezielt abzuschalten, damit den diesen zugeordneten Ausbringelementen kein Saatgut zugeführt wird, um beispielsweise Fahrgassen anzulegen. Diese Einrichtungen sind so ausgebildet, dass das Saatgut über separate Rückführleitungen wieder in den Saatgutvorrat des Vorratsbehälters zurückgeführt werden. Diese Ausgestaltung ist sehr aufwendig.

Der Erfindung liegt die Aufgabe zugrunde, die Anordnungsart des Ablösebereiches der vereinzelten Saatkörner zumindest der abzuschaltenden Perforationsreihen zu optimieren, so dass eine vereinfachte Rückführung der abgelösten Saatkörner in den Saatgutvorrat erreichbar ist bzw. erreicht wird.

Diese Aufgabe wird erfindungsgemäß dadurch gelöst, dass die Einmündungsöffnungen der Ausbringleitungen und die zugeordneten Abdeckeinrichtungen im auf die Drehrichtung bezogenen aufsteigenden Rotationsbereich des Vereinzelungsbereiches der Trommel angeordnet sind.

Infolge dieser Maßnahmen wird der Ablösebereich der Saatkörner von den Perforationen und der Überführungsbereich der Saatkörner in den Einmündungsöffnungen der Ausbringleitungen in einen Bereich verlagert, in dem die den abgesperrten Ausbringleitungen an sich zuzuführenden Saatkörner bereits in einem Bereich von der Trommel abgelöst werden, bevor sie in die Einmündungsöffnungen der Ausbringleitungen gelangen in welchem sie allein aufgrund der Schwerkraft, ohne zusätzliche Rückführeinrichtungen in den Saatgutvorrat zurückfallen könne, ohne dass separat Rückführleitungen geschaffen werden.

Eine Verkleinerung des mit Überdruck beaufschlagten Bereiches des Vereinzelungsgehäuses und Saatgutvorratbehälters, in dem der Saatgutvorratsbehälter und die Trommel im Gehäuse mit einem Überdruck gegenüber dem Atmosphärendruck beaufschlagt sind, lässt sich dadurch erreichen, dass eine Wand des Gehäuses im Bereich der Eingangsöffnungen der Ausbringleitungen angeordnet ist.

Um in einfacher Weise die Saatkörner nicht den abzusperrenden Leitungen in einfacher Weise zuzuleiten, sondern diese Saatkörner in den Saatgutvorrat zurückzuführen, ist dadurch zu erreichen, dass zumindest einigen Ausbringleitungen motorisch betätigbare Absperrmittel zugeordnet sind.

Eine vorteilhafte Anordnung der Absperrmitteln, dass keine Saatkörner in die Einmündungsöffnungen der Ausbringleitungen gelangt, lässt sich dadurch erreichen, dass die Absperrmittel im Bereich der Eingangsöffnungen der Ausbringleitungen angeordnet sind.

Alternativ ist es auch möglich, die Absperrmittel beabstandet zu den Eingangsöffnungen der Ausbringleitungen in den Ausbringleitungen anzuordnen. Eine vorteilhafte Anordnung der Eingangsöffnungen und der zugeordneten Abdeckmittel im erfindungsgemäßen Sinne lässt sich dadurch erreichen, dass die Eingangsöffnungen und zugeordneten Abdeckmittel in einem Bereich angeordnet sind, der in einem Winkelbereich zwischen 0° und 60° zu einer durch die Trommeldrehachse gezogenen Horizontalen liegt.

Damit die abgelösten Saatkörner, die in den Saatgutvorrat zurückgeführt werden sollen und nicht in die abgesperrten Einmündungsöffnungen der Ausbringleitungen gelangen können, nicht die danebenliegenden an den Perforationen der Perforationsreihen anhaftenden Samenkörner, die in die Einmündungsöffnung und die Ausbringleitungen gelangen sollen, das Vereinzelungsergebnis nicht stören können, ist vorgesehen, dass zumindest im Übergabebereich der vereinzelten Saatkörner von der Trommel in die Ausbringleitungen zwischen den einzelnen Perforationsreihen Trennwände angeordnet sind, dass die Trennwände zumindest annähernd bis an die Oberfläche der Trommel heranreichen.

Die Trennwände wirken als Leitelement und verhindern das die zurückgeführten Saatkörner in Richtung der nicht abgeschalteten Perforationsreihen sich bewegen könne, sondern sie stellen sicher, dass die zurückzuführenden Saatkörner ohne nachteilige Störung zu verursachen in den Saatgutvorrat zurückfallen. Für schwierige Saatkörner wird eine Verbesserung der störungsfreien Rückführung dadurch erreicht, dass die Trennwände zumindest annähernd bis in den Bereich, in welchem die Saatkörner durch die Abdeckeinrichtung von den Perforationen durch Unterbrechung der Druckdifferenz abgelöst werden, reichen.

Weitere Einzelheiten der Erfindung sind der Beispielsbeschreibung und den Zeichnungen zu entnehmen. Hierbei zeigen
- Fig. 1: das Vereinzelungsgehäuse mit der Vereinzelungstrommel und der Vereinzelungsvorrichtung, ohne seitliche Lagerungselemente der Vereinzelungstrommel und ohne Saatgutvorratsbehälter der Einzelkornsämaschine in perspektivischer Ansicht,
- Fig. 2: das Vereinzelungsgehäuse mit der Vereinzelungstrommel gemäß Fig. 1 in Seitenansicht,

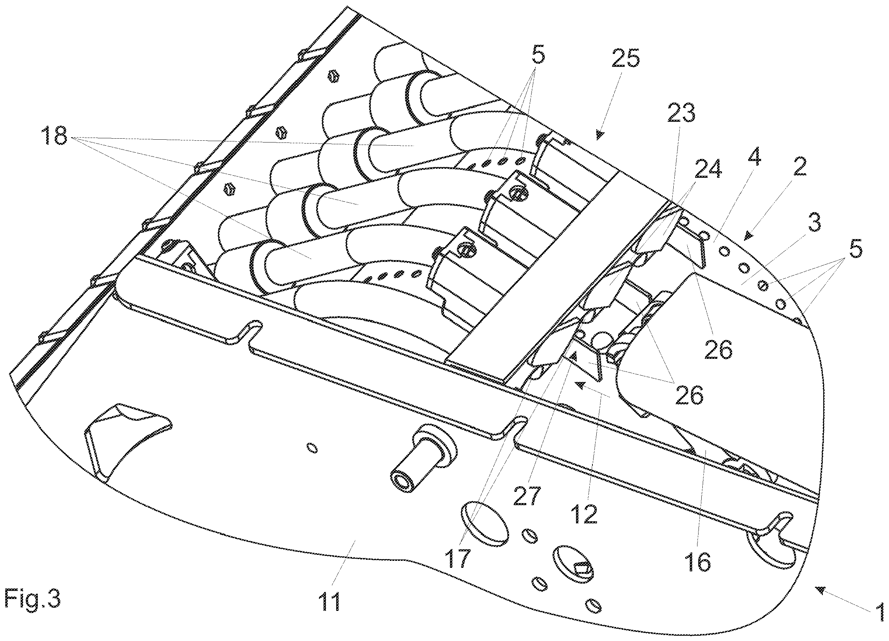

- Fig. 3: ein Teilbereich des Vereinzelungsgehäuses mit dem Ablöse- und Übergabebereich der Saatkörner von der Trommel in die Einmündungsöffnungen der Ausbringleitungen in vergrößertem Maßstab und perspektivischer Ansicht, wobei die Einmündungsöffnung durch die Klappen der Absperrmittel in Öffnungsstellung dargestellt sind und

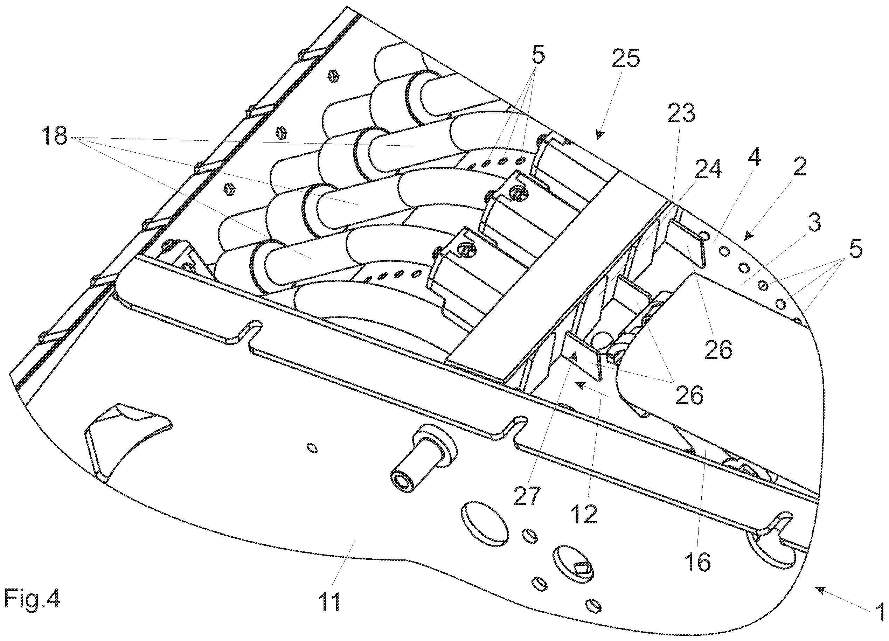

- Fig. 4: ein Teilbereich des Vereinzelungsgehäuses mit dem Ablöse- und Übergabebereich der Saatkörner von der Trommel in die Einmündungsöffnung der Ausbringleitungen in vergrößertem Maßstab und perspektivischer Ansicht gemäß Fig. 3, wobei die Einmündungsöffnung durch die Klappe der Absperrmittel in Absperrstellung dargestellt sind.

Die Einzelkornsämaschine weist das Vereinzelungsgehäuse 1 mit der darin drehbar gelagerten und angetriebenen Vereinzelungstrommel 2, auf. Über eine nicht dargestellte Antriebsvorrichtung wird die Vereinzelungstrommel 2 in Rotation versetzt. Oberhalb der Vereinzelungstrommel 2 ist ein nicht dargestellter Vorratsbehälter angeordnet. In den Umfangsmantel 3 der Vereinzelungstrommel 2 sind kreisförmig in Perforationsreihen 4 angeordnete Perforationen 5 angebracht. Der Vorratsbehälter und das Vereinzelungsgehäuse 1 werden auf der Vereinzelungsseite 6 der Trommel 2 mit einem Überdruck beaufschlagt. Somit entsteht eine Druckdifferenz zwischen dem Innenraum 7 der Vereinzelungstrommel 2 und dem Außenbereich 6 der Vereinzelungstrommel 2 in deren Vereinzelungsbereich 8. Die Druckdifferenz wird durch ein nicht dargestelltes Gebläse erzeugt. Das Gebläse ist über den Anschlussstutzen 9 an das Vereinzelungsgehäuse mittels einer Luftleitung angeschlossen. Wenn die Vereinzelungstrommel 2 durch den Saatgutvorrat, der sich zumindest in dem unteren Bereich der Vereinzelungstrommel 2 in dem Vereinzelungsgehäuse 1 befindet, geführt wird, lagern sich an der Perforationen auf der Außenseite 6 der perforierten Trommel 2 Samenkörner an. Die Seitenwände 11 des Vereinzelungsgehäuses 1 erstrecken sich parallel zur Bewegungsrichtung 12 der Trommel 1 und wirken zumindest annähernd abdichtend mit der Trommel 1 zusammen.

Des Weiteren ist der Trommel 2 eine die an die Perforationen 5 angelegte Druckdifferenz zum Ablösen der Samenkörner von den Perforationen 5 unterbrechende Abdeckeinrichtung 13 im Innenraum 7 der Trommel 2 angeordnet. Diese Abdeckeinrichtung 13 weist auf einer am Vereinzelungsgehäuse 1 angeordneten Welle 14 drehbar gelagerte walzenartige Elemente 15 auf.

Im Vereinzelungsbereich 8 der Trommel 2 ist zwischen dem Saatgutvorratsbereich 10 und dem Bereich, dem die Abdeckeinrichtung 13 zugeordnet ist, eine Abstreifereinrichtung 16 angeordnet, um Doppelbelegungen an den Perforationen 5 zu vermeiden.

Weiterhin weist die Einzelkornsämaschine bis an die Trommeloberfläche der Trommel 2 heranreichende, mit Einmündungsöffnungen 17 versehene Ausbringleitungen 18 auf, welche zu Ausbringelementen, wie beispielsweise Säscharen, führen. Mittels dieser Ausbringleitungen 18 sind die von der Vereinzelungstrommel 2 vereinzelten Saatkörner den Ausbringelementen mittels eines Luftstromes über die Ausbringleitungen 18 zuführbar. Hierbei reicht jeweils das eine Ende der Ausbringleitungen 18 mit ihrer jeweiligen Einmündungsöffnung 17 bis an die Trommeloberfläche der Trommel 2 heran, um so eine sichere Übergabe des vereinzelten Saatkornes über die jeweilige Einmündungsöffnung 17 in die jeweilige Ausbringleitung 18 zu gewährleisten. An die Verbindungsstücke der Ausbringleitungen 18 sind Ausbringverlängerungsleitungen, die die Ausbringleitungen bis zu den Ausbringelementen verlängern, anzuschließen.

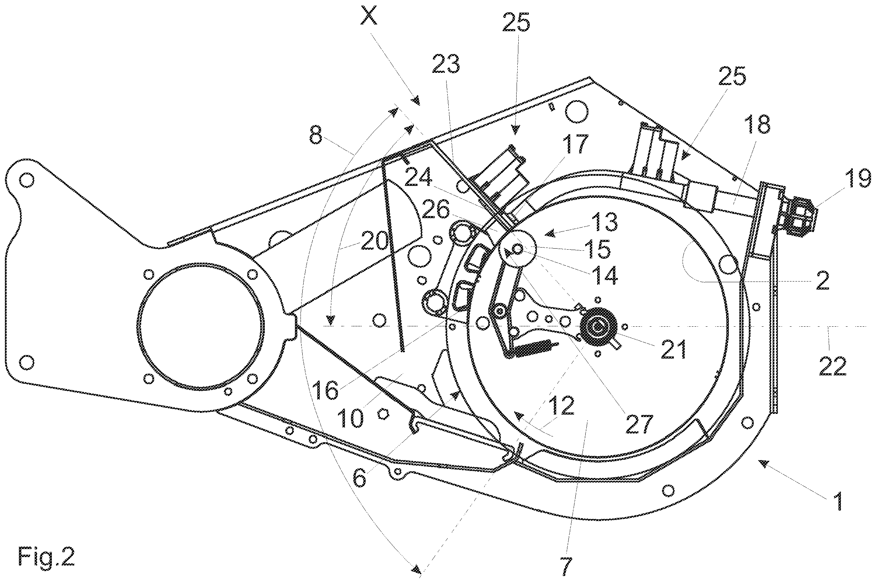

Die Einmündungsöffnungen 17 der Ausbringleitungen 18 und die zugeordneten Abdeckeinrichtungen 13 sind, insbesondere wie die Fig. 2 zeigt, im auf die Drehrichtung 12 der Trommel 2 bezogenen aufsteigenden Rotationsbereich des Vereinzelungsbereiches 8 der Trommel 2 angeordnet. Hierbei sind die Eingangsöffnungen 17 und die zugeordneten Abdeckmittel 15 der Abdeckeinrichtung 13 in einem Bereich angeordnet, der in einem Winkelbereich 20 zwischen 0° und 60°, im Ausführungsbeispiel von etwa 45°, zu einer durch die Trommeldrehachse 21 gezogenen Horizontalen 22 liegt.

Die im Bereich der Ausbringleitungen 18 liegende Wand 23 des Vereinzelungsgehäuses 1 ist im Bereich der Eingangsöffnungen 17 der Ausbringleitungen 18 angeordnet.

Den Ausbringleitungen 18 sind im Bereich der Einmündungsöffnungen 17 als verschwenkbare Klappen 24 ausgebildete Absperrmittel 25 angeordnet, um die jeweilige Eingangsöffnung 17 der Ausbringleitungen 18 absperren zu können.

Weiterhin sind an der im Bereich der Ausbringleitungen 18 angeordneten Wand 23 des Vereinzelungsgehäuses 1 im Bereich der Einmündungsöffnungen 17 Trennwände 26 angeordnet. Diese Trennwände 26 sind im Übergabebereich 27 der vereinzelten Saatkörner von der Trommel 2 in die Ausbringleitungen 18 zwischen den einzelnen Perforationsreihen 4 angebracht. Hierbei reicht die Unterseite der Trennwände 26 zumindest annähernd bis an die Oberfläche der Trommel 2 heran. Weiterhin sind die Trennwände 26 zumindest annähernd bis in den Bereich, in welchem die Saatkörner durch die Abdeckeinrichtung 13 von den Perforationen 4 durch die Unterbrechung der Druckdifferenz abgelöst werden, reichend angeordnet.

Wenn einzelnen Ausbringleitungen 18, d.h. einzelnen Ausbringelementen zur Reduzierung der Arbeitsbreite oder zum Anlegen von Fahrgassen keine Saatkörner zugeleitet werden sollen, werden über eine vorzugsweise elektronische Steuereinrichtung ansteuerbare Betätigungseinrichtungen für die Klappen 24 der Absperrmittel 25 betätigt.

Wenn die Klappen 24 der Absperrmittel 25 die Einmündungsöffnungen 17 der Ausbringleitungen 18 verschließen, wie Fig. 5 dargestellt ist, können die Saatkörner nicht mehr über die Einmündungsöffnungen 17 in die Ausbringleitungen 18 gelangen und fallen aufgrund der Schwerkraft entlang der Trommeloberfläche der Trommel 2 seitlich der Perforationsreihen 4 in den Saatgutvorratsbereich 10 zurück. Durch die Trennwände 26 wird verhindert, dass die Saatkörner beim Ablösevorgang und zu Beginn des Zurückfallvorganges in den Saatgutvorratsbereich 10 soweit seitlich abgelenkt werden können, dass sie die vereinzelten Saatkörner der benachbarten Perforationsreihen 4 berühren oder die Vereinzelung der Saatkörner der benachbarten Perforationsreihen 5 stören können.

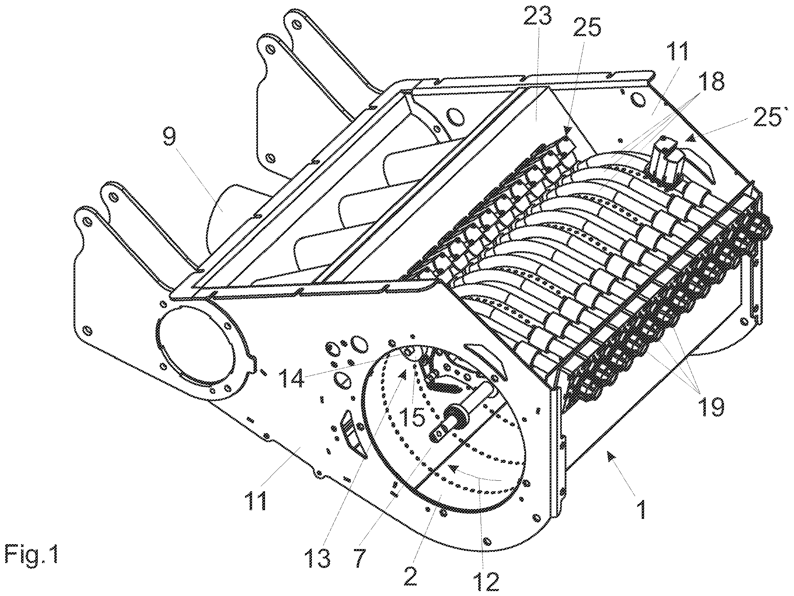

Die den einzelnen Ausbringleitungen 18 zugeordneten Absperrmittel 25 können unmittelbar den Eingangsöffnungen 17 zugeordnet sein oder auch im Abstand zu den Einmündungsöffnungen 17 der Ausbringleitungen 18 in der Weise zugeordnet sein, dass sie den Luftstrom innerhalb der Ausbringleitungen 18 unterbrechen können, wie dies in Fig. 1 bei der ganz rechten Leitung durch das dort dargestellte Absperrmittel 25' dargestellt ist. Hierdurch entsteht ein Luftstau am Beginn der Einmündungsöffnung 17 der abgesperrten Ausbringleitung 18, so dass keine Saatkörner in die Ausbringleitung 18 gelangen können, sondern ebenfalls in den Saatgutvorratsbereich 10 in vorbeschriebener Weise zurückfallen.

## Patentansprüche

1. Pneumatische Einzelkornsämaschine mit einem einen Saatgutvorratsbehälter aufweisenden Gehäuse und zumindest einer drehbar angetriebenen Vereinzelungstrommel, in deren Umfangsmantel kreisförmig in Perforationsreihen angeordnete Perforationen angebracht sind, einem Gebläse, mittels welchem eine Druckdifferenz zwischen dem Innenraum der Vereinzelungstrommel und dem Außenbereich der Vereinzelungstrommel erzeugbar ist, so dass, wenn die Vereinzelungstrommel durch den Saatgutvorrat geführt wird, sich an den Perforationen auf der Außenseite der perforierten Trommel Samenkörner anlagern, wobei das Gehäuse zwei voneinander beabstandete Seitenwände aufweist, die sich parallel zur Bewegungsrichtung der Trommel erstrecken und mit der Trommel zumindest annähernd abdichtend zusammenwirken, wobei eine die an die Perforationen angelegte Druckdifferenz zum Ablösen der Saatkörner von den Perforationen unterbrechende Abdeckeinrichtung im Innenraum der Trommel angeordnet ist, wobei zumindest einigen der Ausbringleitungen Absperrmittel zugeordnet sind, wobei im Bereich der Abdeckeinrichtung und den Perforationsreihen jeweils das eine Ende einer Ausbringleitung mit ihrer Einmündungsöffnung bis an die Trommeloberfläche zumindest annähernd heranreichend angeordnet ist, **dadurch gekennzeichnet, dass** die Einmündungsöffnungen (17) der Ausbringleitungen (18) und die zugeordneten Abdeckeinrichtungen (13) im auf die Drehrichtung (12) bezogenen aufsteigenden Rotationsbereich des Vereinzelungsbereiches (8) der Trommel (2) angeordnet sind.

2. Einzelkörnsämaschine nach Anspruch 1, wobei der Saatgutvorratsbehälter und die Trommel (2) im Gehäuse (1) mit einem Überdruck gegenüber dem Atmosphärendruck beaufschlagt sind, **dadurch gekennzeichnet, dass** eine Wand ( 23) des Gehäuses (1) im Bereich der Eingangsöffnungen (17 ) der Ausbringleitungen (18) angeordnet ist.

3. Einzelkornsämaschine nach Anspruch 1, **dadurch gekennzeichnet, dass** zumindest einigen Ausbringleitungen (18) motorisch betätigbare Absperrmittel (24, 25) zugeordnet sind.

4. Einzelkornsämaschine nach Anspruch 3, **dadurch gekennzeichnet, dass** die Absperrmittel (24, 25) im Bereich der Eingangsöffnungen (17) der Ausbringleitungen (18) angeordnet sind.

5. Einzelkornsämaschine nach Anspruch 3, **dadurch gekennzeichnet, dass** die Absperrmittel (25') beabstandet zu den Eingangsöffnungen (17) der Ausbringleitungen (18) in den Ausbringleitungen (18) angeordnet sind.

6. Einzelkornsämaschine nach einem oder mehreren der vorstehenden Ansprüche, **dadurch gekennzeichnet, dass** die Eingangsöffnungen (17) und zugeordneten Abdeckmittel (24, 25) in einem Bereich angeordnet sind, der in einem Winkelbereich (20) zwischen 0° und 60° zu einer durch die Trommeldrehachse (21) gezogenen Horizontalen (22) liegt.

7. Einzelkornsämaschine nach einem oder mehreren der vorstehenden Ansprüche, **dadurch gekennzeichnet, dass** zumindest im Übergabebereich der vereinzelten Saatkörner von der Trommel (2) in die Ausbringleitungen (18) zwischen den einzelnen Perforationsreihen (4) Trennwände (26) angeordnet sind, dass die Trennwände (26) zumindest annähernd bis an die Oberfläche der Trommel (2) heranreichen.

8. Einzelkornsämaschine nach Anspruch 7, **dadurch gekennzeichnet, dass** die Trennwände (26) zumindest annähernd bis in den Bereich, in welchem die Saatkörner durch die Abdeckeinrichtung (13) von den Perforationen (5) durch Unterbrechung der Druckdifferenz abgelöst werden, reichen.

## Claims

1. Pneumatic single grain seed drill having a housing having a seed storage container, and at least one rotatably driven singling drum, in the circumferential lateral surface of which there are provided perforations arranged in rows of perforations in a circular manner, a fan, by means of which a pressure difference between the interior of the singling drum and the exterior region of the singling drum is creatable, such that, when the singling drum is guided through the seed store, grains are taken up at the perforations on the outer side of the perforated drum, wherein the housing has two spaced-apart side walls which extend parallel to the direction of movement of the drum and interact with the drum in an at least approximately sealing manner, wherein a covering device for interrupting the pressure difference applied at the perforations in order to detach the grains from the perforations is arranged in the interior of the drum, wherein at least some of the dispensing lines are assigned shut-off means, wherein, in the region of the covering device and the rows of perforations, in each case one end of a dispensing line is arranged with its mouth opening extending at least approximately as far as the drum surface, **characterized in that** the mouth openings (17) of the dispensing lines (18) and the assigned covering devices (13) are arranged in the ascending rotational region, with respect to the direction of rotation (12), of the singling region (8) of the drum (2).

2. Single grain seed drill according to Claim 1, wherein the seed storage container and the drum (2) in the housing (1) are subjected to a positive pressure compared with atmospheric pressure, **characterized in that** a wall (23) of the housing (1) is arranged in the region of the inlet openings (17) of the dispensing lines (18).

3. Single grain seed drill according to Claim 1, **characterized in that** at least some dispensing lines (18) are assigned shut-off means (24, 25) that are actuable in a motorized manner.

4. Single grain seed drill according to Claim 3, **characterized in that** the shut-off means (24, 25) are arranged in the region of the inlet openings (17) of the dispensing lines (18).

5. Single grain seed drill according to Claim 3, **characterized in that** the shut-off means (25') are arranged in the dispensing lines (18) at a distance from the inlet openings (17) of the dispensing lines (18).

6. Single grain seed drill according to one or more of the preceding claims, **characterized in that** the inlet openings (17) and associated covering means (24, 25) are arranged in a region which is in an angular range (20) of between 0° and 60° to a horizontal line (22) drawn through the drum axis of rotation (21).

7. Single grain seed drill according to one or more of the preceding claims, **characterized in that**, at least in the region in which the singled seeds are transferred from the drum (2) into the dispensing lines (18), partition walls (26) are arranged between the individual rows (4) of perforations, and **in that** the partition walls (26) reach at least approximately as far as the surface of the drum (2).

8. Single grain seed drill according to Claim 7, **characterized in that** the partition walls (26) reach at least approximately into the region in which the seeds are detached from the perforations (5) by the covering device (13) by interruption of the pressure difference.

## Revendications

1. Semoir monograine pneumatique avec un boîtier présentant un réservoir de stockage de semences et au moins un tambour séparateur entraîné en rotation, dans la surface latérale duquel des perforations disposés en lignes de perforations sont pratiquées en forme de cercle, avec une soufflante, à l'aide de laquelle il est possible de produire une différence de pression entre l'espace intérieur du tambour séparateur et la région extérieure du tambour séparateur, de telle manière que, lorsque le tambour séparateur est conduit à travers le réservoir de semences, des graines de semences se déposent aux perforations sur le côté extérieur du tambour perforé, dans lequel la soufflante présente deux parois latérales espacées l'une de l'autre, qui s'étendent parallèlement à la direction de déplacement du tambour et qui coopèrent de façon au moins sensiblement étanche avec le tambour, dans lequel un dispositif de recouvrement interrompant la différence de pression appliquée aux perforations pour détacher les graines de semences des perforations est disposé dans l'espace intérieur du tambour, dans lequel des moyens d'arrêt sont associés au moins à quelques conduites de dépôt, dans lequel une première extrémité d'une conduite de dépôt est disposée respectivement avec son embouchure atteignant au moins approximativement la surface du tambour dans la région du dispositif de recouvrement et des lignes de perforations, **caractérisé en ce que** les embouchures (17) des conduites de dépôt (18) sont disposées dans la région de rotation montante par rapport au sens de rotation (12) de la région de séparation (8) du tambour (2).

2. Semoir monograine selon la revendication 1, dans lequel le réservoir de semences et le tambour (2) sont soumis dans le boîtier (1) à une surpression par rapport à la pression atmosphérique, **caractérisé en ce qu'**une paroi (23) du boîtier (1) est disposée dans la région des ouvertures d'entrée (17) des conduites de dépôt (18).

3. Semoir monograine selon la revendication 1, **caractérisé en ce que** des moyens d'arrêt (24, 25) pouvant être entraînés par un moteur sont associés à au moins quelques conduites de dépôt (18).

4. Semoir monograine selon la revendication 3, **caractérisé en ce que** les moyens d'arrêt (24, 25) sont disposés dans la région des ouvertures d'entrée (17) des conduites de dépôt (18).

5. Semoir monograine selon la revendication 3, **caractérisé en ce que** les moyens d'arrêt (24, 25) sont disposés dans les conduites de dépôt (18) à distance des ouvertures d'entrée (17) des conduites de dépôt (18).

6. Semoir monograine selon une ou plusieurs des revendications précédentes, **caractérisé en ce que** les ouvertures d'entrée (17) et les moyens de recouvrement associés (24, 25) sont disposés dans une région, qui est située dans une zone angulaire (20) entre 0° et 60° par rapport à une horizontale (22) tracée à travers l'axe de rotation du tambour (21).

7. Semoir monograine selon une ou plusieurs des revendications précédentes, **caractérisé en ce que** des parois de séparation (26) sont disposées au moins dans la région de transfert des graines de semences séparées du tambour (2) dans les conduites de dépôt (18) entre les lignes de perforations individuelles (4), de telle manière que les parois de séparation (26) s'étendent au moins approximativement jusqu'à la surface du tambour (2).

8. Semoir monograine selon la revendication 7, **caractérisé en ce que** les parois de séparation (26) arrivent au moins approximativement jusque dans la région dans laquelle les graines de semences sont détachées des perforations (5) par le dispositif de recouvrement (13) par interruption de la différence de pression.
